# EUROPÄISCHE PATENTSCHRIFT

(11) **EP 2 199 635 B1**
(45) Veröffentlichungstag und Bekanntmachung des Hinweises auf die Patenterteilung: **08.02.2012**
(21) Anmeldenummer: 08172346.2
(22) Anmeldetag: 19.12.2008
(51) Int. Cl.: F16D 41/07

(54) **Freilaufeinbauelement und Freilauf**
Freewheel element and free wheel
Elément encastrable à roue libre et roue libre

(43) Veröffentlichungstag der Anmeldung: 23.06.2010
(73) Patentinhaber: Paul Müller GmbH & Co. KG Unternehmensbeteiligungen, 90411 Nürnberg (DE)
(72) Erfinder: Feldmeier, Fritz, 90475 Nürnberg (DE)
(74) Vertreter: Lösch, Christoph Ludwig Klaus

(56) Entgegenhaltungen:
- WO-A-03/072968
- DE-A1- 4 032 915
- US-A- 2 520 004
- US-A- 2 793 729
- US-A- 2 803 324

## Beschreibung

Die Erfindung betrifft ein Freilaufeinbauelement und einen Freilauf. Freilaufeinbauelemente finden in Freiläufen, d. h. in Richtungskupplungen, die in eine Richtung ein Drehmoment durch Kraftschluss übertragen bzw. abstützen und in der Gegenrichtung Leerlauf zulassen, Anwendung. Bei Freiläufen mit Klemmkörpern befinden sich die Klemmkörper in der sog. Klemmposition, wenn sie das Drehmoment kraftschlüssig, d.h. reibschlüssig übertragen und in der sog. Freilaufposition, wenn sie Leerlauf zulassen.

Bei herkömmlichen Freiläufen mit Klemmkörpern besteht das Freilaufeinbauelement aus den folgenden drei Elementen: den Klemmkörpern, dem Käfig und den Federn. Die Klemmkörper sind mittels Federkraft in Kontakt mit einer äußeren und einer inneren zylindrischen Klemmbahn zu bringen. Die Klemmkörper werden in einem sog. Käfig in gleichem Abstand am Umfang verkeilt gehalten, wobei auf jedem Klemmkörper eine Federkraft wirkt, die sich am Käfig abstützt. Derartige Freilaufeinbauelemente bekannter Bauart bestehen daher aus mindestens drei verschiedenen Komponenten, was einen entsprechend hohen Fertigungsaufwand nach sich zieht.

Eine gattungsgemäße Freilaufbauelement bzw, ein gattungsgemäßer Freilauf ist aus US-A-2,793,279 bekannt.

Aufgabe der vorliegenden Erfindung ist es, ein Freilaufeinbauelement und einen Freilauf zur Verfügung zu stellen, bei der das Ansprechverhalter über einer weiter Bereich angepasst werden kann.

Diese Aufgabe wird für das Freilaufelement durch die Merkmale des Patentanspruchs 1 gelöst. Vorteilhafte Ausführungsformen des Freilaufelements sind in den Unteransprüchen 2 - 12 beschrieben. Für den Freilauf wird die Aufgabe durch die Merkmale des Patentanspruchs 13 gelöst.

Vorteilhafte Ausführungsformen des Freilaufs sind in den Unteransprüchen 14 und 15 beschrieben.

Das erfindungsgemäße Freilaufeinbauelement weist einer Vielzahl von Klemmkörpern auf, wobei jeder Klemmkörper eine Außenkontaktfläche zur Ausbildung eines reibschlüssigen Kontakts mit einer Außenklemmbahn und eine Innenkontaktfläche zur Ausbildung eines reibschlüssigen Kontakts mit einer Innenklemmbahn aufweist, und wobei eine Vielzahl von Zwischenelementen vorgesehen ist, die eine höhere Elastizität als die Klemmkörper aufweisen und zwischen benachbarten Klemmkörpern angeordnet sind. Außerden bestehen zweinander liegende Zwischenelemente aus verschiedenen Werkstoffen.

Durch einen derartigen Aufbau können der Käfig und die Federn entfallen, was zu einem besonders einfach aufgebauten und einfach zu fertigenden Freilaufeinbauelement führt. Durch die im Vergleich zu den Klemmkörpern höhere Elastizität der Zwischenelemente wird die Verformbarkeit der Klemmkörper innerhalb des Freilaufeinbauelements sowie die Verformbarkeit des Freilaufeinbauelements selbst erhöht.

Die Klemmkörper sind bevorzugt aus einem metallischen Material, z.B. aus einem Stahlwerkstoff. Entsprechend weisen die Zwischenelemente dann eine Elastizität auf, die größer ist als die Elastizität von metallischen Werkstoffen.

Der Werkstoff bzw. die Werkstoffe, aus dem das Zwischenelement aufgebaut ist, besitzen in bevorzugter Weise eine Shorehärte von 30 Shore A bis 80 Shore A. Die Shore-Härte ist eine weit verbreitete Kenngröße zur Prüfung von Kunststoffen und Elastomeren und ist in den Normen DIN 53505, ISO 868 und ISO 7619 beschrieben.

In vorteilhafter Weise sind die Zwischenelemente derart ausgebildet, die Klemmkörper in ihrer Lage zu fixieren und abzufedern. Durch ein gleichzeitiges Fixieren und Abfedern der Klemmkörper durch die Zwischenelemente ist eine besonders kompakte Bauweise des Freilaufeinbauelements möglich.

Bestehen die Zwischenelemente aus elastischen Materialien mit hoher Eigendämpfung, z. B. aus Kautschuk, dann führt die Kippbewegung beim Einrollen der Klemmkörper zu einer Verformung des zwischen den Klemmkörpern angeordneten dämpfenden Materials der Zwischenelemente und damit zum Entzug von Schwingungsenergie, was zu einer besonders ausgeprägten Dämpfung durch das Freilaufelement führt.

In einer vorteilhaften Ausführungsform sind die Zwischenelemente mit den Klemmkörpern verbunden. Insbesondere können die Zwischenelemente stoffschlüssig mit den Klemmkörpern verbunden sein, was zu einem besonders zuverlässigen und stabilen Verbund von Zwischenelementen und Klemmkörpern führt und dadurch beispielsweise die Handhabbarkeit des Freilaufeinbauelements verbessert. Hierbei kann die stoffschlüssige Verbindung beispielsweise als Klebeverbindung ausgeführt sein. Auch können die Zwischenelemente als Gießmasse bzw. mehrere Gießmassen ausgestaltet sein und die stoffschlüssige Verbindung durch einen Gießprozess, in dem die Klemmkörper - zumindest teilweise - durch die Gießmasse bzw. Gießmassen umschlossen werden, hergestellt werden. Auch ist es möglich, die Zwischenelemente aus einer Spritzgussmasse bzw. Spritzgussmassen herzustellen und die Zwischenelemente mit Hilfe eines Spritzgussprozesses mit den Klemmkörpern zu verbinden.

In einer weiteren vorteilhaften Ausführungsform entsprechen die Zwischenelemente in ihrer Kontur der Kontur der benachbarten Klemmkörper. Eine derartige Ausgestaltung der Kontur erlaubt eine besonders zuverlässige Verbindung zwischen dem Zwischenelement und den an diesen angrenzenden Klemmkörper.

Erfindungsgemäß bestehen die Zwischenelemente aus mehreren unterschiedlichen Werkstoffen. Hierbei ist es vorgesehen, dass benachbart zueinander liegende Zwischenelemente aus unterschiedlichen Werkstoffen bestehen, zum anderen ist es auch möglich, dass ein Zwischenelement selbst aus verschiedenen Werkstoffen aufgebaut ist. Insgesamt wird dadurch die Variabilität und Anpassbarkeit des Freilaufelements an verschiedene Einsatzgebiete erhöht.

In einer weiteren vorteilhaften Ausführungsform variiert die Elastizität mindestens eines Zwischenelements entlang der Richtung von der Innenklemmbahn zur Außenklemmbahn. Diese Variation in der Elastizität kann beispielsweise durch den Aufbau des Zwischenelements durch verschiedene Werkstoffe bzw. durch eine graduelle Variation der Elastizität des verwendeten Werkstoffs erreicht werden. Die Variation der Elastizität erhöht ebenfalls die Anpassbarkeit des Freilaufeinbauelements.

Je nach gewünschtem Einsatzgebiet und je nach gewünschter Elastizität können die Zwischenelemente aus in bevorzugten Ausführungsformen zumindest teilweise aus Silikonwerkstoff, aus thermoplastischen Polymeren, aus vulkanisiertem Kautschuk, aus duroplastischen Polymeren (z.B. Kunstharz), aus Elastomeren oder aus einer Mischung der vorgenannten Werkstoffe hergestellt sein. Nach der Erfindung variiert die Werkstoffzusammensetzung von Zwischenelement zu Zwischenelement. Dies erhöht die Variabilität des Freilaufeinbauelements sowie dessen Anpassbarkeit an verschiedene Anwendungsfälle.

In einer weiteren vorteilhaften Ausführungsform ist das Freilaufeinbauelement bandförmig ausgebildet. Hierdurch ist die Herstellung des Freilaufeinbauelements als endloses Band möglich. Nach der Herstellung kann das Freilaufeinbauelement dann auf die gewünschte Umlauflänge zerteilt und zwischen eine Innenkontaktfläche und eine Außenkontaktfläche eingelegt werden.

In einer weiteren vorteilhaften Ausführungsform ist das Freilaufeinbauelement ringförmig ausgebildet. Dadurch kann das Freilaufeinbauelement besonders einfach in einem Freilauf eingebaut werden und ermöglicht einen reibschlüssigen Kontakt über den gesamten Umfang der Außen- bzw. Innenklemmbahn.

Der erfindungsgemäße Freilauf weist einen Innenring, dessen äußere Mantelfläche eine Innenklemmbahn bildet, und einem Außenring, dessen innere Mantelfläche eine Außenklemmbahn bildet, und ein zwischen der Innenklemmbahn und der Außenklemmbahn angeordnetes erfindungsgemäßes Freilaufeinbauelement auf.

In einer bevorzugten Ausführungsform des Freilaufes ist zumindest ein Teil der Klemmkörper in ihrer Klemmposition mit den Zwischenelementen verbunden. Insbesondere können Klemmkörper derart relativ zu den Zwischenelementen angeordnet sein, d.h. beispielsweise in die Zwischenelemente eingebettet sein, dass die Klemmkörper um ihren Klemmwinkel gegenüber den Klemmbahnen verkippt ist.

In einer weiteren Ausführungsform kann zumindest ein Teil der Klemmkörper in ihrer Freilaufposition mit den Zwischenelementen verbunden sein.

In Freilaufeinbauelementen bzw. in Freiläufen, die viel im Freilauf betrieben werden, bestehen die Zwischenelemente in besonders bevorzugter Weise aus sehr elastischem Material, um die Reibung zwischen Klemmkörper und Klemmbahnen niedrig zu halten.

Die Erfindung ist anhand von Ausführungsbeispielen in den Zeichnungsfiguren weiter erläutert. Es zeigen:
- Fig. 1: eine erste Ausführungsform des Freilaufeinbauelements;
- Fig. 2: einen vergrößerten Ausschnitt aus dem in Fig. 1 dargestellten Freilaufeinbauelement;
- Fig. 3: eine Schnittdarstellung des in Fig. 2 dargestellten Freilaufeinbauelements;
- Fig. 4: eine zweite Ausführungsform des Freilaufeinbauelements;
- Fig. 5: einen Freilauf.

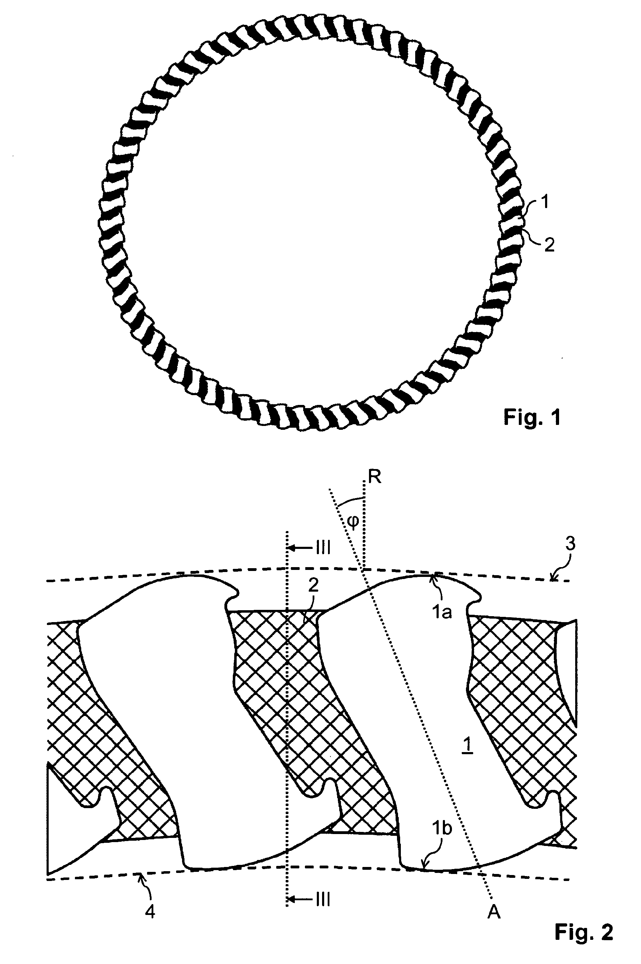

Fig. 1 zeigt ein Freilaufeinbauelement mit einer Vielzahl von Klemmkörpern 1 und Zwischenelementen 2, wobei in Figuren in der Regel jeweils nur ein Klemmkörper 1 und ein Zwischenelement 2 mit einem Bezugszeichen versehen sind. Das Freilaufeinbauelement ist ringförmig ausgebildet und die Klemmkörper 1 sowie die Zwischenelemente 2 sind gleichmäßig über den Umfang verteilt.

Fig. 2 zeigt einen vergrößerten Ausschnitt aus Fig. 1. Der Klemmkörper 1 weist eine Außenkontaktfläche 1 a zur Ausbildung eines reibschlüssigen Kontakts mit einer Außenklemmbahn 3 und eine Innenkontaktfläche 1 b zur Ausbildung eines reibschlüssigen Kontakts mit einer Innenklemmbahn 4 auf. Zwischen den Klemmkörpern 1 befindet sich jeweils ein Zwischenelement 2. Der Klemmkörper 1 ist hierbei bezüglich der Außenklemmbahn 3 bzw. der Innenklemmbahn 4 verkippt in die Zwischenelemente 2 eingebettet. Mit anderen Worten ist die Klemmkörperachse A des Klemmkörpers 1 nicht in radialer Richtung ausgerichtet, sondern schließt mit der radialen Richtung R den Winkel ϕ ein.

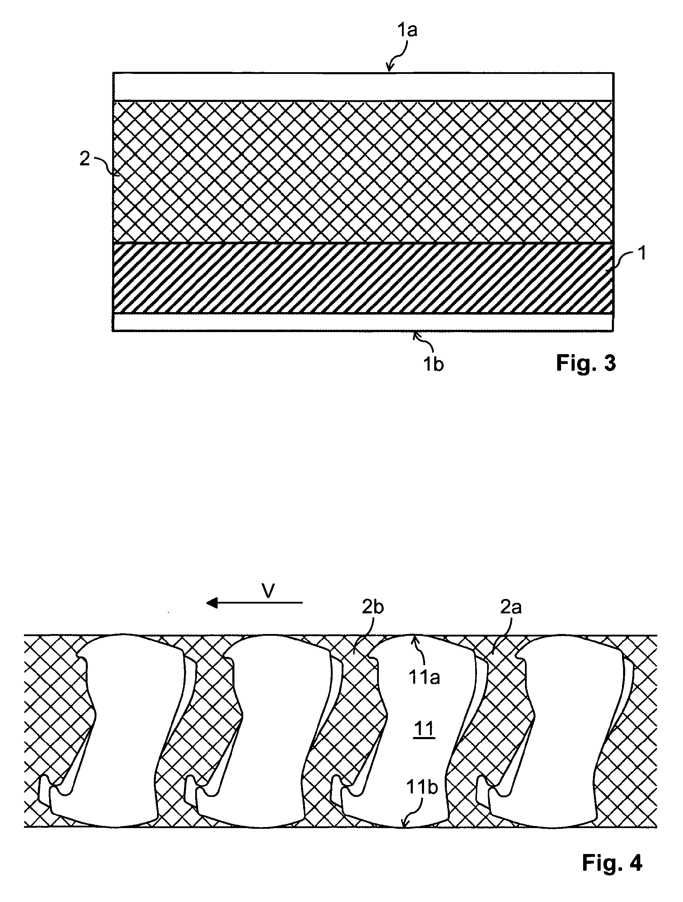

Fig. 3 zeigt eine Schnittdarstellung entlang der in Fig. 2 eingezeichneten Schnittfläche III-III. Das Zwischenelement 2 besitzt eine axiale Ausdehnung, die der axialen Ausdehnung des Klemmkörpers 1 entspricht. Durch die Begrenzung der Ausdehnung des Zwischenelements 2 in axialer Richtung auf die Ausdehnung des Klemmkörpers 1 ist ein besonders kompaktes Freilaufeinbauelement herstellbar.

In einer weiteren, nicht in den Zeichnungsfiguren dargestellten Ausführungsform, kann das Zwischenelement 2 den Klemmkörper 1 auch in axialer Richtung überragen. Dies führt zu einer besonders lagestabilen Anordnung der einzelnen Klemmkörper 1 innerhalb der Zwischenelemente 2.

Fig. 4 zeigt einen Ausschnitt aus einer zweiten Ausführungsform des Freilaufeinbauelements. Das in Fig. 4 dargestellte Freilaufeinbauelement ist bandförmig ausgebildet und kann auf die gewünschte Umlauflänge zerteilt und zwischen eine Innenkontaktfläche 4 (in Fig. 4 nicht dargestellt) und eine Außenkontaktfläche 3 (in Fig. 4 nicht dargestellt) eingelegt werden.

Im Unterschied zu dem in Fig. 1 und Fig. 2 dargestellten Freilaufeinbauelement füllt das Zwischenelement 2 den in Umfangsrichtung zwischen zwei benachbarten Klemmkörpern 11 gelegenen Raum im Wesentlichen vollständig aus, sodass die Kontur des Klemmkörpers 11 bis auf die Außenkontaktfläche 1a und die Innenkontaktfläche 1 b vollständig mit dem Zwischenelement 2a bzw. 2b in Kontakt steht.

Fig. 4 zeigt die Klemmkörper 11 zugleich in ihrer Freilaufposition und - die Freilaufposition teilweise überlagernd - in ihrer Klemmposition. In der Klemmposition befinden sich die Klemmkörper 11, wenn die Außenkontaktfläche 1 a durch Ausbildung eines reibschlüssigen Kontakts in die Verdrehrichtung V relativ zur Innenkontaktfläche 1 b verdreht wird und beide Kontaktflächen 1 a und 1 b einen reibschlüssigen Kontakt mit den in Fig. 4 nicht dargestellten Klemmbahnen ausbilden. Die benachbart zu den jeweiligen Klemmkörpern liegenden Zwischenelemente 2 - beispielsweise die Zwischenelemente 2a und 2b bezüglich des in Fig. 4 mit dem Bezugszeichen versehenen Klemmkörper 11 - sind mit dem Klemmkörper fest verbunden und verformen sich aufgrund ihres elastischen Werkstoffverhaltens bei der Verschiebung des Klemmkörpers 11 von dessen Freilaufposition in dessen Klemmposition bzw. bei dessen Verschiebung von der Klemmposition in die Freilaufposition entsprechend.

Erfindungsgemäß sind die benachbart zueinander liegenden Zwischenelemente 2a und 2b aus verschiedenen Werkstoffen, insbesondere aus Werkstoffen mit unterschiedlicher Elastizität, hergestellt.

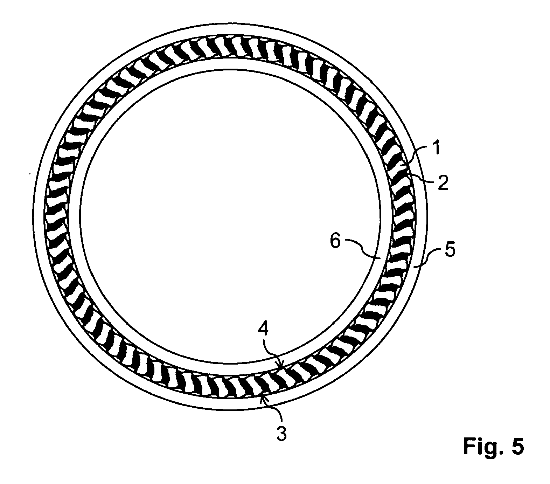

Fig. 5 zeigt einen Freilauf mit einem Freilaufeinbauelement, welches aus einer Vielzahl von Klemmkörpern 1 und Zwischenelementen 2 besteht. Die innerer Mantelfläche des Außenrings 5 bildet die Außenklemmbahn 3. Die äußere Mantelfläche des Innenrings 6 bildet die Innenklemmbahn 4. Der Innenring 6 und der Außenring 5 sind konzentrisch zueinander angeordnet und zwischen die Außenklemmbahn 3 und der Innenklemmbahn 4 ist das Freilaufeinbauelement mit den Klemmkörpern 1 und den Zwischenelementen 2 angebracht.

### BEZUGSZEICHENLISTE

- 1: Klemmkörper
- 1a: Außenkontaktfläche
- 1b: Innenkontaktfläche
- 2, 2a, 2b: Zwischenelement
- 3: Außenklemmbahn
- 4: Innenklemmbahn
- 5: Außenring
- 6: Innenring
- 11: Klemmkörper
- 11a: Außenkontaktfläche
- 11b: Innenkontaktfläche
- A: Klemmkörperachse
- R: radiale Richtung
- V: Verdrehrichtung
- ϕ: Winkel

## Patentansprüche

1. Freilaufeinbauelement mit einer Vielzahl von Klemmkörpern (1, 11), wobei jeder Klemmkörper (1, 11) eine Außenkontaktfläche (1a, 11a) zur Ausbildung eines reibschlüssigen Kontakts mit einer Außenklemmbahn (3) und eine Innenkontaktfläche (1 b, 11 b) zur Ausbildung eines reibschlüssigen Kontakts mit einer Innenklemmbahn (4) aufweist, und wobei eine Vielzahl von Zwischenelementen (2, 2a, 2b) vorgesehen ist, die eine höhere Elastizität als die Klemmkörper (1, 11) aufweisen und zwischen benachbarten Klemmkörpern (1, 11) angeordnet sind,
**gekennzeichnet dadurch, dass**
benachbart zueinander liegende Zwischenelemente (2, 2a, 2b) aus verschiedenen Werkstoffen, insbesondere aus Werkstoffen mit unterschiedlicher Elastizität, bestehen.

2. Freilaufeinbauelement nach Anspruch 1, wobei die Zwischenelemente (2, 2a, 2b) derart ausgebildet sind, die Klemmkörper (1, 11) in ihrer Lage zu fixieren und abzufedern.

3. Freilaufeinbauelement nach einen der vorhergehenden Ansprüche, wobei die Zwischenelemente (2, 2a, 2b) mit den Klemmkörpern (1, 11) verbunden, insbesondere stoffschlüssig verbunden, sind.

4. Freilaufeinbauelement nach einen der vorhergehenden Ansprüche, wobei die Zwischenelemente (2, 2a, 2b) in ihrer Kontur der Kontur der benachbarten Klemmkörper (1, 11) entsprechen.

5. Freilaufeinbauelement nach einen der vorhergehenden Ansprüche, wobei die Zwischenelemente (2, 2a, 2b) jeweils aus mehreren unterschiedlichen Werkstoffen bestehen.

6. Freilaufeinbauelement nach einen der vorhergehenden Ansprüche, wobei die Elastizität mindestens eines Zwischenelements (2, 2a, 2b) entlang der Richtung von der Innenklemmbahn (4) zur Außenklemmbahn (3) variiert.

7. Freilaufeinbauelement nach einen der vorhergehenden Ansprüche, wobei die Zwischenelemente (2, 2a, 2b) teilweise aus einem Silikon bestehen.

8. Freilaufeinbauelement nach einen der vorhergehenden Ansprüche, wobei die Zwischenelemente (2, 2a, 2b) teilweise aus einem thermoplastischen Polymer bestehen.

9. Freilaufeinbauelement nach einen der vorhergehenden Ansprüche, wobei die Zwischenelemente (2, 2a, 2b) teilweise aus einem Elastomer, insbesondere einem vulkanisierten Kautschuk, bestehen.

10. Freilaufeinbauelement nach einen der vorhergehenden Ansprüche, wobei die Zwischenelemente (2, 2a, 2b) teilweise aus einem duroplastischen Polymer, insbesondere einem Kunstharz, bestehen.

11. Freilaufeinbauelement nach einen der vorhergehenden Ansprüche, wobei das Freilaufeinbauelement bandförmig ausgebildet ist.

12. Freilaufeinbauelement nach einen der vorhergehenden Ansprüche 1 bis 10, wobei das Freilaufeinbauelement ringförmig ausgebildet ist.

13. Freilauf, mit einem Innenring (6), dessen äußere Mantelfläche eine Innenklemmbahn (4) bildet, und einem Außenring (5), dessen innere Mantelfläche eine Außenklemmbahn (3) bildet und einem zwischen der Innenklemmbahn (4) und der Außenklemmbahn (3) angeordneten Freilaufeinbauelement nach einem der Ansprüche 1 - 12.

14. Freilauf nach Anspruch 13, wobei zumindest ein Teil der Klemmkörper (1, 11) in ihrer Klemmposition mit den Zwischenelementen (2, 2a, 2b) verbunden ist.

15. Freilauf nach Anspruch 13 - 14, wobei zumindest ein Teil der Klemmkörper (1, 11) in ihrer Freilaufposition (2, 2a, 2b) mit den Zwischenelementen verbunden ist.

## Claims

1. Freewheel insert element with a multiplicity of clamping bodies (1, 11), wherein each clamping body (1, 11) has an outer contact surface (1a, 11a) for forming frictional contact with an outer clamping track (3), and an inner contact surface (1b, 11b) for forming frictional contact with an inner clamping track (4), and wherein a multiplicity of intermediate elements (2, 2a, 2b) is provided, said intermediate elements being more elastic than the clamping bodies (1, 11) and being arranged between adjacent clamping bodies (1, 11), **characterized in that** intermediate elements (2, 2a, 2b) which are adjacent to one another consist of different materials, in particular materials of differing elasticity.

2. Freewheel insert element according to Claim 1, wherein the intermediate elements (2, 2a, 2b) are designed so as to fix the clamping bodies (1, 11) in position and to cushion said clamping bodies.

3. Freewheel insert element according to one of the preceding claims, wherein the intermediate elements (2, 2a, 2b) are connected to the clamping bodies (1, 11), in particular are connected thereto in a cohesively bonded manner.

4. Freewheel insert element according to one of the preceding claims, wherein the intermediate elements (2, 2a, 2b) correspond in contour to the contour of the adjacent clamping bodies (1, 11).

5. Freewheel insert element according to one of the preceding claims, wherein the intermediate elements (2, 2a, 2b) each consist of a plurality of different materials.

6. Freewheel insert element according to one of the preceding claims, wherein the elasticity of at least one intermediate element (2, 2a, 2b) varies along the direction from the inner clamping track (4) to the outer clamping track (3).

7. Freewheel insert element according to one of the preceding claims, wherein the intermediate elements (2, 2a, 2b) are partially composed of a silicone.

8. Freewheel insert element according to one of the preceding claims, wherein the intermediate elements (2, 2a, 2b) are partially composed of a thermoplastic polymer.

9. Freewheel insert element according to one of the preceding claims, wherein the intermediate elements (2, 2a, 2b) are partially composed of an elastomer, in particular a vulcanized natural rubber.

10. Freewheel insert element according to one of the preceding claims, wherein the intermediate elements (2, 2a, 2b) are partially composed of a thermosetting polymer, in particular a synthetic resin.

11. Freewheel insert element according to one of the preceding claims, wherein the freewheel insert element is of strip-shaped design.

12. Freewheel insert element according to one of the preceding Claims 1 to 10, wherein the freewheel insert element is of annular design.

13. Freewheel, with an inner ring (6), the outer casing surface of which forms an inner clamping track (4), and an outer ring (5), the inner casing surface of which forms an outer clamping track (3), and a freewheel insert element according to one of Claims 1-12 arranged between the inner clamping track (4) and the outer clamping track (3).

14. The freewheel according to Claim 13, wherein at least one part of the clamping bodies (1, 11) is connected in the clamping position thereof to the intermediate elements (2, 2a, 2b).

15. The freewheel according to Claims 13-14, wherein at least one part of the clamping bodies (1, 11) is connected in the freewheel position thereof (2, 2a, 2b) to the intermediate elements.

## Revendications

1. Elément encastrable de roue libre présentant plusieurs corps de serrage (1, 11), chaque corps de serrage (1, 11) présentant une surface extérieure de contact (1a, 11a) destinée à entrer en contact de frottement avec une piste extérieure de serrage (3) et une surface intérieure de contact (1b, 11b) destinée à entrer en contact de frottement avec une piste intérieure de serrage (4),
plusieurs éléments intermédiaires (2, 2a, 2b) présentant une élasticité plus élevée que les corps de serrage (1, 11) étant disposés entre les corps de serrage (1, 11) voisins,
**caractérisé en ce que**
des éléments intermédiaires (2, 2a, 2b) situés au voisinage les uns des autres sont constitués de matériaux différents et en particulier de matériaux qui présentent différentes élasticités.

2. Elément encastrable de roue libre selon la revendication 1, dans lequel les éléments intermédiaires (2, 2a, 2b) sont configurés de telle sorte qu'ils immobilisent et soutiennent élastiquement les corps de serrage (1, 11) dans leur position.

3. Elément encastrable de roue libre selon l'une des revendications précédentes, dans lequel les éléments intermédiaires (2, 2a, 2b) sont reliés aux corps de serrage (1, 11), en particulier en correspondance de matière.

4. Elément encastrable de roue libre selon l'une des revendications précédentes, dans lequel le contour des éléments intermédiaires (2, 2a, 2b) correspond au contour des corps de serrage (1, 11) voisins.

5. Elément encastrable de roue libre selon l'une des revendications précédentes, dans lequel les éléments intermédiaires (2, 2a, 2b) sont tous constitués de plusieurs matériaux différents.

6. Elément encastrable de roue libre selon l'une des revendications précédentes, dans lequel l'élasticité d'au moins un élément intermédiaire (2, 2a, 2b) varie dans la direction allant de la piste intérieure de serrage (4) à la piste extérieure de serrage (3).

7. Elément encastrable de roue libre selon l'une des revendications précédentes, dans lequel les éléments intermédiaires (2, 2a, 2b) sont constitués de silicone.

8. Elément encastrable de roue libre selon l'une des revendications précédentes, dans lequel les éléments intermédiaires (2, 2a, 2b) sont constitués en partie d'un polymère thermoplastique.

9. Elément encastrable de roue libre selon l'une des revendications précédentes, dans lequel les éléments intermédiaires (2, 2a, 2b) sont constitués en partie d'un élastomère et en particulier d'un caoutchouc vulcanisé.

10. Elément encastrable de roue libre selon l'une des revendications précédentes, dans lequel les éléments intermédiaires (2, 2a, 2b) sont constitués en partie d'un polymère thermodurcissable et en particulier d'une résine synthétique.

11. Elément encastrable de roue libre selon l'une des revendications précédentes, dans lequel l'élément encastrable de roue libre est configuré en bande.

12. Elément encastrable de roue libre selon l'une des revendications précédentes, selon l'une des revendications 1 à 10 qui précèdent, dans lequel le composant encastrable de roue libre a une configuration annulaire.

13. Système de roue libre doté d'une bague intérieure (6) dont la surface d'enveloppe extérieure forme une piste intérieure de serrage (4), d'une bague extérieure (5) dont la surface d'enveloppe intérieure forme une piste extérieure de serrage (3) et d'un composant encastrable de roue libre selon l'une des revendications 1 à 12 disposé entre la piste intérieure de serrage (4) et la piste extérieure de serrage (3).

14. Système de roue libre selon la revendication 13, dans lequel au moins une partie des corps de serrage (1, 11) est reliée aux éléments intermédiaires (2, 2a, 2b) lorsqu'ils sont en position de serrage.

15. Système de roue libre selon les revendications 13 et 14, dans lequel au moins une partie des corps de serrage (1, 11) est reliée aux éléments intermédiaires lorsqu'ils sont dans leur position de rotation libre (2, 2a, 2b).
